(19) Europäisches Patentamt
European Patent Office
Office européen des brevets

(11) Publication number: **0 068 874**
**B1**

# (12) EUROPEAN PATENT SPECIFICATION

(45) Date of publication of patent specification: **03.04.85**

(21) Application number: **82303379.0**

(22) Date of filing: **28.06.82**

(51) Int. Cl.⁴: **C 07 F 5/02,** C 07 F 9/06, G 03 G 5/09

(54) **Benzotelluropyrylium diketonate electron accepting dye sensitizers, their method for preparation and electron donating photoconductive compositions containing same.**

(30) Priority: **01.07.81 US 279363**

(43) Date of publication of application: **05.01.83 Bulletin 83/01**

(45) Publication of the grant of the patent: **03.04.85 Bulletin 85/14**

(84) Designated Contracting States: **BE DE FR GB**

(56) References cited:
**US-A-4 123 268**
**US-A-4 177 284**

(73) Proprietor: **EASTMAN KODAK COMPANY**
**343 State Street**
**Rochester New York 14650 (US)**

(72) Inventor: **Detty, Michael Ray**
**132 Burwell Road**
**Rochester New York 14617 (US)**
Inventor: **Murray, Bruce John**
**196 Holleybrook Road**
**Brockport New York 14420 (US)**
Inventor: **Perlstein, Jerome Howard**
**65 Runnymede Road**
**Rochester New York 14618 (US)**

(74) Representative: **Pepper, John Herbert et al**
**KODAK LIMITED Patent Department P.O. Box 114 190 High Holborn**
**London WC1V 7EA (GB)**

**EP 0 068 874 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to benzotelluropyrylium diketonate compounds, a method for making such dyes and their utility as electron acceptors in electron donating photoconductive compositions.

U.S. Patent 4,123,268 discloses diketone compounds containing boron atoms which are electron accepting sensitizers for photoconductor compounds. The utility of these boron containing compounds is with respect to improving the photoresponse of polymeric type photoconductor compounds which have slow response to electromagnetic radiation.

Neither compounds comprising telluropyrylium nuclei, including benzotelluropyrylium nuclei, nor methods for making such dyes are known in the art.

The present invention provides compounds which comprise a benzotelluropyrylium diketonate nucleus. The diketonate nucleus is defined as a 4-*H*-benzo[b]telluropyrone or a 4-*H*-benzo[b]telluropyrone thione which has a 5-oxo or a 5-thio substituent forming a boronate or phosphonate ester involving the hetero atoms at the 4 and 5 positions. These compounds are useful as electron acceptors for increasing the sensitivity of organic photoconductive compositions containing electron donating photoconductor compounds.

Compounds comprising a benzotelluropyrylium diketonate nucleus having the structural formula:

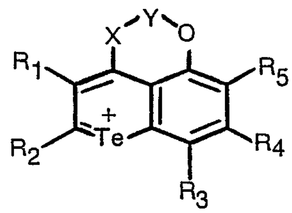 (I).

$R_1$ represents a hydrogen or a halogen atom or an alkyl, alkoxy, aryl or aryloxy group, or $R_1$ and $R_2$, taken together with the carbon atoms to which they are attached, can form a mono- or polycyclic, carbocyclic or heterocyclic fused ring structure having from 5 to 20 carbon atoms;

$R_2$ can be represented by the same substituents as defined for $R_1$, and can also be an amino, alkylamino, dialkylamino, arylamino, diarylamino, $-(CH{=}CH)_n-CH{=}A_1$ or $-(CH{=}CH)_n-A_2$ group;

$R_3$ and $R_4$ each independently can represent a hydrogen or a halogen atom or an alkyl, alkoxy, aryl, aryloxy, amino, alkylamino, dialkylamino, arylamino or diarylamino group, or $R_3$ and $R_4$, or $R^4$ and $R^5$, taken together with the carbon atoms to which they are attached, can form a mono- or polycyclic, carbocyclic or heterocyclic fused ring structure having from 5 to 20 carbon atoms;

$A_1$ represents a heterocyclylidene group containing at least one oxygen, sulfur, nitrogen, phosphorus, selenium or tellurium atom;

$A_2$ represents an alkyl, alkoxy, aryl, aryloxy, amino, alkylamino, dialkylamino, arylamino, diarylamino or dialkylaminoaryl group, or a mono- or polycyclic, heterocyclic group containing at least one oxygen, sulfur, nitrogen, phosphorus, selenium or tellurium atom;

n is 0, 1 or 2;

X is oxygen or sulfur; and

Y is $BF_2$ or $PF_4$.

Preferred dyes of this invention comprise a benzotelluropyrylium diketonate nucleus having a structure according to Formula I wherein:

$R_2$ represents a hydrogen atom or a phenyl, methyl, 4-methoxyphenyl, 2,5-dimethoxy phenyl, $-(CH{=}CH)_n-A_2$ or $-(CH{=}CH)_n-CH{=}A_1$ group;

$A_1$ represents 4*H*-7-methoxy-2-phenyl benzo[b]telluropyranylidene;

$A_2$ represents dimethylamino or 9-julolidyl;

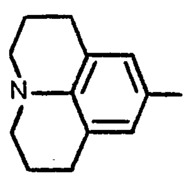 ;

$R_1$, $R_3$, $R_4$ and $R_5$ each independently represents a hydrogen atom or a methoxy group; and n is 0 or 1.

For the purposes of this invention, heteroaryl, heterocyclic and heterocyclylidene groups have hetero atoms such as oxygen, nitrogen, sulfur, phosphorus, selenium or tellurium. Examples of these include groups used to form cyanine dyes, such as pyridyl, furaryl, thiopyranyl, selenopyranyl, telluropyranyl, oxazolyl, thiazolyl, selenazolyl, tellurazolyl, benzoxazolyl, benzthiazolyl, benzselenazolyl or benztellurazolyl.

"Alkyl", used herein, as a prefix or a suffix, refers to a branched- or straight-chain hydrocarbon having from 1 to 16 carbon atoms, such as methyl, butyl, isobutyl, nonyl and dodecyl. "Aryl," as a suffix or a prefix,

refers to phenyl, naphthyl and anthryl. Heteroaryl, heterocyclylidene, alkyl and aryl are optionally further substituted with, for example, a halogen atom or an allyl, aryl, nitro, cyano, carboxy, hydroxy, alkoxy, aryloxy, aralkyl, acyl, carbamoyl, sulfamoyl, dialkylamino or amino group. Halogen refers to chlorine, bromine, iodine or fluorine.

The dyes of this invention are prepared from benzotelluropyrone compounds which are prepared by:

cyclizing a 3-aryltelluroacrylic acid or a 3-aryltelluroacryloyl halide, wherein the aryltelluroacrylic acid or 3-aryltelluroacryloyl halide has the structural formula:

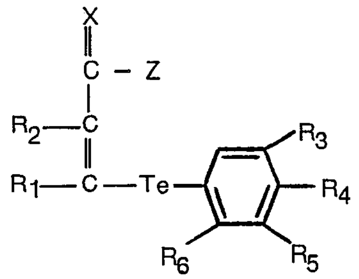

(II)

to obtain the resulting substituted benzotelluropyrone having the structural formula:

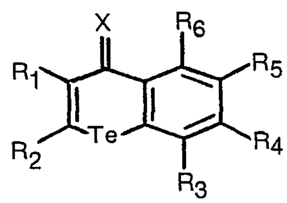

(III)

wherein:

$R_1$, $R_2$, $R_3$, $R_4$, $R_5$ and X are as defined above;

$R_6$ represents a hydroxy, alkoxy or aryloxy group; and

Z represents OH or a bromine, chlorine or iodine atom.

Table I presents dyes made according to one or more of the procedures disclosed in the examples below. The structural formulae of all dyes were confirmed by NMR analysis, infrared spectral analysis, mass spectral analysis or elemental analysis.

TABLE I

Benzotelluropyrylium Diketonates
Electron Accepting Sensitizers

| | Dye | |
|---|---|---|
| 1 | 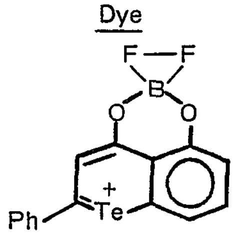 | 2-Phenylbenzo[b]telluropyrylium-4,5-(difluoroboronate) (mp 204—205°C) |
| 2 | 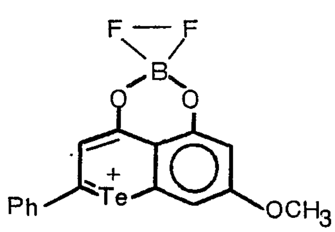 | 7-Methoxy-2-phenylbenzo[b]telluropyrylium-4,5-(difluoroboronate) (mp 224.5—226.5°C) |
| 3 | 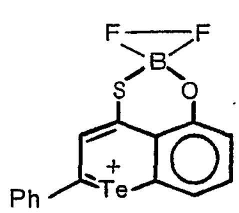 | 2-Phenylbenzo[b]telluropyrylium-4S,5-(difluoroboronate) (mp 182°C, dec.) |

TABLE I

Benzotelluropyrylium Diketonates
Electron Accepting Sensitizers

| Dye | | |
|---|---|---|
| 4 | 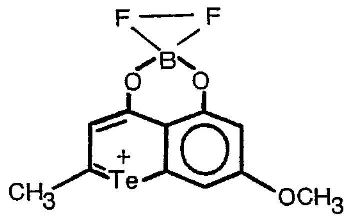 | 7-Methoxy-2-methylbenzo[b]telluropyrylium-4,5-(difluoroboronate) (mp 239—242°C) |
| 5 | 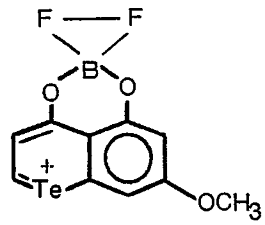 | 7-Methoxybenzo[b]telluropyrylium-4,5-(difluoroboronate) |
| 6 | 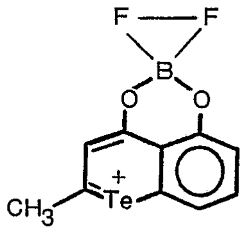 | 2-Methylbenzo[b]telluropyrylium-4,5-(difluoroboronate) |
| 7 | 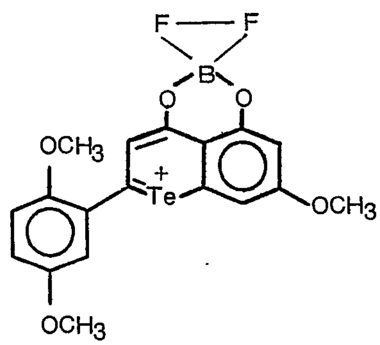 | 2-(2,5-dimethoxyphenyl)-7-methoxybenzo[b]telluropyrylium-4,5-(difluoroboronate) (mp 304—306°C) |
| 8 | 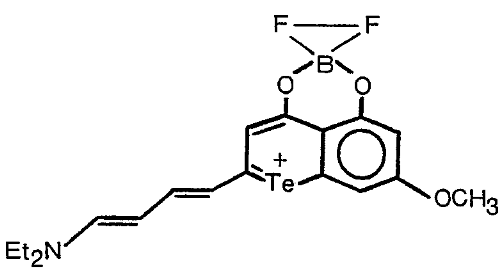 | 2-(4-diethylamino-1,3-butadien-1-yl)-7-methoxybenzo[b]telluropyrylium-4,5-(difluoroboronate) |

TABLE I

Benzotelluropyrylium Diketonates
Electron Accepting Sensitizers

Dye

9 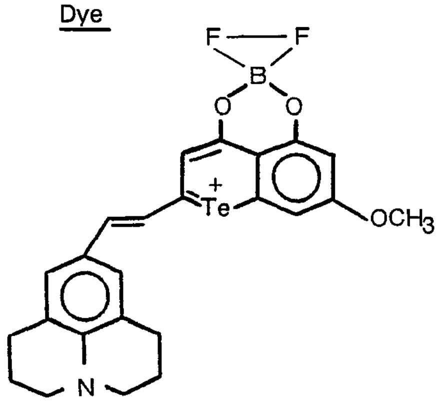 2-(2-(9-julolidyl)ethenyl)-7-methoxybenzo[b]-telluropyrylium-4,5-(difluoroboronate)

10 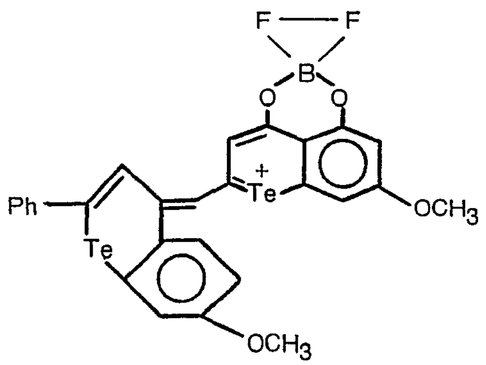 2-(4*H*-7-methoxy-2-phenylbenzo[b]telluropyran-4-ylidenemethyl)-7-methoxybenzo[b]telluro-pyrylium-4,5-(difluoroboronate)

11 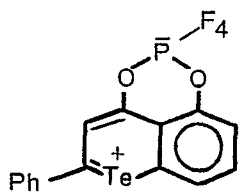 2-Phenylbenzo[b]telluropyrylium-4,5-(tetrafluoro-phosphonate) (mp 189—220°C, dec.)

12 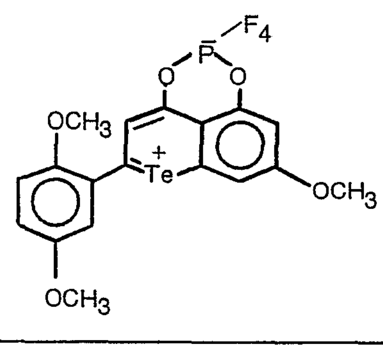 2-(2,5-dimethoxyphenyl)-7-methoxybenzo[b]-telluropyrylium-4,5-(tetrafluorophosphonate) (mp 240°C, dec.)

---

The present invention provides photoconductive compositions in which organic electron donor-type photoconductor compounds are combined with sensitizing amounts of the electron accepting dyes as described.

The compositions are prepared by blending a dispersion or solution of a sensitizing amount of a benzotelluropyrylium diketonate dye compound with a donor type photoconductor compound and an electrically insulating, film-forming resin binder. The dispersion or solution is then coated on a support, or a self-supporting layer is formed with the photoconductive composition. The amount of dye contained in a photoconductive composition layer to provide effective results may be as low as 0.001 to as much as 30

percent by weight, based on the weight of the film-forming coating composition. The usual amount of dye is from 0.05 to 10 percent by weight of the coating composition.

The dyes used in this invention are effective for enhancing the photosensitivity of a wide variety of donor-type photoconductor compounds, especially those containing a tertiary amine component. Useful photoconductor compounds are described below:

(1) arylamine photoconductor compounds, including substituted and unsubstituted arylamines, diarylamines, non- polymeric triarylamines and polymeric triaryl- amines such as those described in U.S. Patents 3,240,597 and 3,180,730;

(2) polyarylalkane photoconductor compounds of the types described in U.S. Patents 3,274,000; 3,542,547; and 3,542,544;

(3) 4-diarylamino-substituted chalcone compounds of the types described in U.S. Patent 3,526,501;

(4) nonionic cycloheptenyl compounds of the types described in U.S. Patent 3,533,786;

(5) compounds containing an

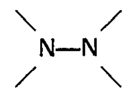

nucleus, as described in U.S. Patent 3,542,546;

(6) organic compounds having a 3,3′-bisaryl-2-pyrazoline nucleus, as described in U.S Patent 3,527,602;

(7) triarylamine compounds in which at least one of the aryl radicals is substituted by either a vinyl radical or a vinylene radical having at least one active hydrogen-containing group, as described in U.S. Patent 3,567,450;

(8) triarylamine compounds in which at least one of the aryl radicals is substituted by an active hydrogen-containing group, as described in Belgian Patent 728,563;

(9) any other organic donor compound which exhibits photoconductive properties, such as those set forth in Australian Patent 248,402, and the various polymeric photoductor compounds such as the carbazol polymers described in U.S. Patent 3,421,891.

The following examples are presented to illustrate the utility of this invention.

Benzotelluropyrylium boron diketonate compounds are prepared by reacting a benzotelluropyrone with boron trifluoride etherate, or with phosphorous pentafluoride, in ethylene glycol dimethyl ether.

Example 1

*Preparation of 2-Phenylbenzo[b]telluropyrylium-4,5-(difluoroboronate) (Dye 1, Table I)*

2-Phenyl-5-methoxybenzotelluropyrone (0.30 g, 0.83 mmol) was dissolved in 3 ml of boron trifluoride etherate. The resulting solution was warmed on a steam bath for 0.5 hour. After cooling to room temperature, 10 ml of ether were added to the reaction mixture. A dark red solid was collected by filtration and washed with ether. The solid was recrystallized from acetonitrile to yield 0.24 g (73%) of red needles.

Example 2

*Preparation of 7-Methoxy-2-phenylbenzo[b]telluropyrylium-4,5-(difluoroboronate) (Dye 2, Table I)*

5,7-dimethoxy-2-phenylbenzotelluropyrone (0.85 g, 2.2 mmole) was dissolved in 5 ml of boron trifluoride etherate. The resulting solution was warmed on a steam bath for 0.5 hour. After cooling to room temperature, 10 ml of ether were added to the reaction mixture. A dark red solid was collected by filtration and washed with ether (3 × 25 ml). The solid was recrystallized from acetonitrile to yield 0.66 g (72%) of fine, red needles.

Benzotelluropyrylium phosphorous diketonate compounds are prepared according to Example 3.

Example 3

*Preparation of 2-Phenylbenzo[b]telluropyrylium-4,5-(tetrafluorophosphonate) (Dye 11, Table I)*

2-Phenyl-5-hydroxybenzotelluropyrone (0.20 g, 0.57 mmole) was dissolved in 5 ml of ethylene glycol dimethyl ether. Phosphorous pentafluoride was bubbled into the solution giving a magenta color and an exothermic reaction. The reaction mixture was chilled, precipitating 0.14 g of a deep red solid.

Examples 4—8

The following examples show use of the dyes of the present invention as sensitizers in electrophotographic elements. Each film was formulated and coated as follows: Specific amounts of a dye sensitizer, as described in Table II, and tri-*p*-tolylamine were dissolved in dichloromethane. A Lexan 145** (a bisphenol polycarbonate compound available from General Electric Co.)—dichloromethane solution was added to the dye sensitizer—tri-*p*-tolylaminedichloromethane solution. The solution was stirred for several minutes and then coated at 0.15 mm wet thickness on a poly(ethylene terephthalate) support containing 0.4 OD* evaporated nickel. After initial evaporation of the solvent, the films were dried for 24 hours in air at 60°C.

** trade mark

* OD = optical transmission density

Dry thickness was 7 μm. Sufficient amounts of the dye sensitizer, tri-*p*-tolylamine, and Lexan 145 were used to prepare coated films containing, by weight, 2% dye sensitizer, 38% tri-*p*-tolylamine and 60% Lexan 145. However, the coated films in Example 8 contained 0.5% dye sensitizer and 39.5% tri-*p*-tolylamine.

The quantum efficiency ($\Phi_o$) of each film was measured as follows. Samples were corona-charged to a surface potential equivalent to the field strengths, $E_o$, indicated in Table II. They were then exposed to monochromatic radiation at a wavelength of (λ) 350 nm with a bandwidth of 10 nm. The incident photon flux at 350 nm was measured with an Optronics Laboratories Model 730-A Radiometer. Films were allowed to discharge while exposed to the 350-nm radiation. The initial quantum efficiency ($\Phi_o$) (the number of electron-hole pairs produced per incident photon) at field strength $E_o$ was then determined by computation of the slope of the discharge curve at $E_o$. The photodischarge sensitivity at 350 nm ($S_{1/2}$), was also determined by allowing the films to discharge from $E_o$ to $E_o/2$. The amount of radiation necessary to produce this discharge was then calculated from the time required for this half-decay and the incident photon flux.

Dyes 1, 2, 3, 4 and 11 of Table I were tested as described above. Each of the dyes resulted in an increase in the speed and/or quantum efficiency of the photoconductive layers in which they were included. The quantitative results are presented in Table II below.

TABLE II

| Example No. | Table I Sensitizer | $E_o$ V/cm | $\Phi_o$ | $S_{1/2}$ ergs/cm$^2$ |
|---|---|---|---|---|
| | Control | $1.6 \times 10^6$ | 0.0094 | 1500 |
| 4 | 1 | $1.3 \times 10^6$ | 0.203 | 30 |
| 5 | 2 | $1.1 \times 10^6$ | 0.169 | 34 |
| 6 | 3 | $2.2 \times 10^5$ | 0.0027 | 239 |
| 7 | 4 | $1.1 \times 10^6$ | 0.18 | 19 |
| 8 | 11 | $8.6 \times 10^5$ | 0.069 | 64 |

**Claims**

1. A benzotelluropyrylium diketonate compound having the structural formula:

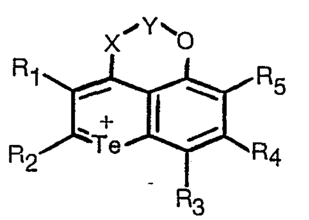
, (I).

wherein,

$R_1$ represents a hydrogen or a halogen atom or an alkyl, alkoxy, aryl or aryloxy group, or $R_1$ and $R_2$, taken together with the carbon atoms to which they are attached, can form a mono- or polycyclic, carbocyclic or heterocyclic fused ring structure having from 5 to 20 carbon atoms;

$R_2$ can be represented by the same substituents as defined for $R_1$, and can also be an amino, alkylamino, dialkylamino, arylamino, diarylamino, $-(CH{=}CH)_n-CH{=}A_1$ or $-(CH{=}CH)_nA_2$ group;

$R_3$ and $R_4$ each independently can represent a hydrogen or a halogen atom or an alkyl, alkoxy, aryl, aryloxy, amino, alkylamino, dialkylamino, arylamino or diarylamino group, or $R_3$ and $R_4$, or $R^4$ and $R^5$, taken together with the carbon atoms to which they are attached, can form a mono- or polycyclic, carbocyclic or heterocyclic fused ring structure having from 5 to 20 carbon atoms;

$A_1$ represents a heterocyclylidene group containing at least one oxygen, sulfur, nitrogen, phosphorus, selenium or tellurium atom;

$A_2$ represents an alkyl, alkoxy, aryl, aryloxy, amino, alkylamino, dialkylamino, arylamino, diarylamino or dialkylaminoaryl group, or a mono- or polycyclic, heterocyclic group containing at least one oxygen, sulfur, nitrogen, a phosphorus, selenium or tellurium atom;

n is 0, 1 or 2

X is oxygen or sulfur; and

Y is $BF_2$ or $PF_4$.

2. A compound according to Claim 1 wherein:

$R_2$ represents a hydrogen atom or a phenyl, methyl, 4-methoxyphenyl, 2,5-dimethoxy phenyl, —$(CH=CH)_nA_2$ or —$(CH=CH)_n$—$CH=A_1$ group;

$A_1$ represents 4*H*-7-methoxy-2-phenyl benzo[b]telluropyranylidene;

$A_2$ represents dimethylamino or 9-julolidyl;

$R_1$, $R_3$, $R_4$ and $R_5$ each independently represents a hydrogen atom or a methoxy group; and

n is 0 or 1.

3. A method of making a benzotelluropyrylium boron diketonate compound as claimed in claim 1 or 2, wherein Y is $BF_2$, comprising reacting a benzotelluropyrone with boron trifluoride etherate in ethylene glycol dimethyl ether.

4. A method of making a benzotelluropyrylium phosphorous diketonate compound as claimed in claim 1 or 2, wherein Y is $PF_4$, comprising reacting a benzotelluropyrone with phosphorous pentafluoride in ethylene glycol dimethyl ether.

5. A photoconductive composition comprising an electron donating organic photoconductor compound and a sensitizing amount of benzotelluropyrylium diketonate compound according to Claim 1 or 2.

6. A photoconductive composition according to Claim 5 wherein said diketonate compound is present in an amount of from .001 to 30% by weight of the composition.

**Revendications**

1. Composé du type benzotelluropyrylium dicétonate ayant la structure:

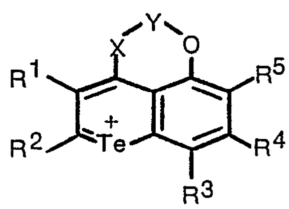

(I).

où

$R^1$ représente un atome d'hydrogène ou d'halogène, ou un groupe alkyle, alkoxy, aryle ou aryloxy, ou $R^1$ et $R^2$ ensemble et avec les atomes de carbone auxquels ils sont attachés peuvent former une structure à noyau condensé mono ou polycyclique, carbocyclique ou hétérocyclique, ayant de 5 à 20 atomes de carbones;

$R^2$ peut représenter les mêmes substituants que ceux définis pour $R^1$, et peut aussi être un groupe amino, alkylamino, dialkylamino, arylamino, diarylamino, —$(CH=CH)_n$—$CH=A^1$ ou —$(CH=CH)_n$—$A^2$;

$R^3$ et $R^4$ chacun indépendamment peuvent représenter un atome d'hydrogène ou d'halogène, ou un groupe alkyle, alkoxy, aryle, aryloxy, amino, alkylamino, dialkylamino, arylamino, ou diarylamino, ou $R^3$ et $R^4$, ou $R^4$ et $R^5$, ensemble, et avec les atomes de carbone auxquels ils sont attachés, peuvent former une structure à noyau condensé mono ou polycyclique, carbocyclique ou hétérocyclique, ayant de 5 à 20 atomes de carbone;

$A^1$ représente un groupe hétérocyclylidène contenant au moins un atome d'oxygène, de soufre, d'azote, de phosphore, de sélénium ou de tellure;

$A^2$ représente un groupe alkyle, alkoxy, aryle, aryloxy, amino, alkylamino, dialkylamino, arylamino, diarylamino ou dialkylaminoaryle, ou un groupe hétérocyclique, mono ou polycyclique, contenant au moins un atome d'oxygène, de soufre, d'azote, de phosphore, de sélénium ou de tellure;

n est égal à 0,1 ou 2;

X est un atome d'oxygène ou de soufre;

Y est $BF_2$ ou $PF_4$.

2. Composé conforme à la revendication 1 dans lequel:

$R^2$ représente un atome d'hydrogène ou un groupe phényle, méthyle, 4-méthoxyphényle, 2,5-diméthoxyphényle, —$(CH=CH)_n$ $A^2$ ou —$(CH=CH)_n$—$CH=A^1$;

$A^1$ représente un groupe 4*H*-7-méthoxy-2-phényl-benzo[b]telluropyranylidène;

$A^2$ représente un groupe diméthylamino ou 9-julolidyle;

$R^1$, $R^3$, $R^4$ et $R^5$ représentent chacun indépendamment un atome d'hydrogène ou un groupe méthoxy;

n est égal à 0 ou 1.

3. Procédé de préparation d'un composé du type benzotelluropyrylium dicétonate de bore tel que revendiqué aux revendications 1 ou 2, dans lequel Y est un groupe $BF_2$, consistant à faire réagir une benzotelluropyrone avec le trifluorure de bore, diéthyléther dans le diméthoxy-1,2 éthane.

4. Procédé de préparation d'un composé du type benzotelluropyrylium dicétonate de phosphore, tel que revendiqué aux revendications 1 ou 2, dans lequel Y est un groupe $PF_4$, consistant à faire réagir une benzotelluropyrone avec le pentafluorure de phosphore dans le diméthoxy-1,2 éthane.

5. Composition photoconductrice comprenant un photoconducteur organique donneur d'électron et

une quantité sensibilisante d'un composé de type benzotelluropyrylium dicétonate conforme aux revendications 1 ou 2.

6. Composition photoconductrice conforme à la revendication 5, dans laquelle le dit composé dicétonate est présent à raison de 0,001 à 30% en masse de la composition.

## Patentansprüche

1. Benzotellurpyryliumdiketonatverbindung der folgenden Strukturformel:

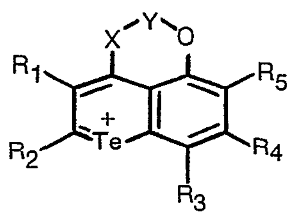

(I).

in der bedeuten:

$R_1$ ein Wasserstoff- oder Halogenatom oder eine Alkyl-, Alkoxy-, Aryl- oder Aryloxygruppe oder

$R_1$ und $R_2$ gemeinsam mit dem Kohlenstoffatom, an dem sie sitzen, eine mono- oder polycyclische, carboxyclische oder heterocyclische ankondensierte Ringstruktur mit 5 bis 20 C-Atomen;

$R_2$ einen Substituenten wie für $R_1$ angegeben sowie ferner eine Amino-, Alkylamino-, Dialkylamino-, Arylamino- oder Diarylaminogruppe oder eine Gruppe einer der Formeln:

$$-(CH{=}CH)_{\overline{n}}-CH{=}A_1 \text{ oder } -(CH{=}CH)_n A_2;$$

$R_3$ und $R_4$ jeweils unabhängig voneinander ein Wasserstoff- oder Halogenatom oder eine Alkyl-, Alkoxy-, Aryl-, Aryloxy-, Amino-, Alkylamino-, Dialkylamino-, Arylamino- oder Diarylaminogruppe oder $R_3$ und $R_4$ oder $R_4$ und $R_5$ gemeinsam mit den Kohlenstoffatomen, an dem sie sitzen, eine mono- oder polycyclische, carbocyclische oder heterocyclische ankondensierte Ringstruktur mit 5 bis 20 C-Atomen;

$A_1$ eine Heterocyclylidengruppe mit mindestens einem Sauerstoff-, Schwefel-, Stickstoff-, Phosphor-, Selen- oder Telluratom;

$A_2$ eine Alkyl-, Alkoxy-, Aryl-, Aryloxy-, Amino-, Alkylamino-, Dialkylamino-, Arylamino-, Diarylamino- oder Dialkylaminoarylgruppe oder eine mono- oder polycyclische, heterocyclische Gruppe mit mindestens einem Sauerstoff-, Schwefel-, Stickstoff-, Phosphor-, Selen- oder Telluratom;

$n = 0,1$ oder 2;

X Sauerstoff oder Schwefel und

$Y = BF_2$ oder $PF_4$.

2. Verbindung nach Anspruch 1, dadurch gekennzeichnet, daß in der angegebenen Strukturformel bedeuten:

$R_2$ eine Wasserstoffatom oder eine Phenyl-, Methyl-, 4-Methoxyphenyl- oder 2,5-Dimethoxyphenylgruppe oder eine Gruppe einer der Formeln $-(CH{=}CH)_n A_2$ oder $-(CH{=}CH)_{\overline{n}}-CH{=}A_1$;

$A_1$ eine 4*H*-7-Methoxy-2-phenyl-benzo[b]-tellurpyranylidengruppe;

$A_2$ eine Dimethylamino- oder 9-Julolidylgruppe;

$R_1$, $R_3$, $R_4$ und $R_5$ jeweils unabhängig voneinander ein Wasserstoffatom oder eine Methoxygruppe und $n = 0$ oder 1.

3. Verfahren zur Herstellung einer Benzotellurpyryliumbordiketonatverbindung nach Anspruch 1 oder 2, wobei $Y = BF_2$ ist, dadurch gekennzeichnet, daß man ein Benzotellurpyron in Ethylenglycoldimethylether mit Bortrifluoridetherat umsetzt.

4. Verfahren zur Herstellung einer Benzotellurpyryliumphosphordiketonatverbindung nach Anspruch 1 oder 2, wobei $Y = PF_4$ ist, dadurch gekennzeichnet, daß man ein Benzotellurpyron in Ethylenglykoldimethylether mit Phosphorpentafluorid umsetzt.

5. Photoleitfähige Zusammensetzung mit einer Elektronen spendenden organischen Photoleiterverbindung und einer sensibilisierenden Menge einer Benzotellurpyryliumdiketonatverbindung nach Anspruch 1 oder 2.

6. Photoleitfähige Zusammensetzung nach Anspruch 5, dadurch gekennzeichnet, daß die Diketonatverbindung in einer Menge von 0,001 bis 30%, bezogen auf das Gewicht der Zusammensetzung, vorliegt.